# EUROPÄISCHE PATENTSCHRIFT

(11) **EP 3 973 722 B1**
(45) Veröffentlichungstag und Bekanntmachung des Hinweises auf die Patenterteilung: **12.10.2022**
(21) Anmeldenummer: 21746449.4
(22) Anmeldetag: 19.07.2021
(51) Int. Cl.: H04W 4/46, H04W 72/02

(54) **VERFAHREN ZUM ÜBERTRAGEN EINER EILNACHRICHT VON EINEM SENDEFAHRZEUG ZU ZUMINDEST EINEM EMPFÄNGERFAHRZEUG ÜBER EIN FUNKNETZWERK SOWIE KRAFTFAHRZEUG, SENDESCHALTUNG UND EMPFANGSSCHALTUNG**
METHOD FOR TRANSMITTING AN URGENT MESSAGE FROM A TRANSMITTING VEHICLE TO AT LEAST ONE RECEIVING VEHICLE VIA A RADIO NETWORK, AND MOTOR VEHICLE, TRANSMITTING CIRCUIT AND RECEIVING CIRCUIT
PROCÉDÉ DE TRANSMISSION D'UN MESSAGE URGENT D'UN VÉHICULE DE TRANSMISSION À AU MOINS UN VÉHICULE DE RÉCEPTION VIA UN RÉSEAU RADIO, ET VÉHICULE MOTORISÉ, CIRCUIT DE TRANSMISSION ET CIRCUIT DE RÉCEPTION

(30) Priorität: 10.08.2020 DE 102020120970
(43) Veröffentlichungstag der Anmeldung: 30.03.2022
(73) Patentinhaber: Audi AG, 85045 Ingolstadt (DE)
(72) Erfinder: HEHN, Thorsten, 85055 Ingolstadt (DE)
(74) Vertreter: Hofstetter, Schurack & Partner
(86) Internationale Anmeldenummer: PCT/EP2021/070087
(87) Internationale Veröffentlichungsnummer: WO 2022/033808

(56) Entgegenhaltungen:
- WO-A2-2018/044365
- ISLAM S M RIAZUL ET AL: "Power-Domain Non-Orthogonal Multiple Access (NOMA) in 5G Systems: Potentials and Challenges", IEEE COMMUNICATIONS SURVEYS & TUTORIALS, Bd. 19, Nr. 2, 1. April 2017 (2017-04-01), - 1. Juni 2017 (2017-06-01), Seiten 721-742, XP011651823, DOI: 10.1109/COMST.2016.2621116 [gefunden am 2017-06-02]
- KIM TAEHYUNG ET AL: "Cooperative Superposed Transmission in Cellular-Based V2V Systems", IEEE TRANSACTIONS ON VEHICULAR TECHNOLOGY, IEEE SERVICE CENTER, PISCATAWAY, NJ, US, Bd. 68, Nr. 12, 1. Dezember 2019 (2019-12-01), Seiten 11888-11901, XP011762174, ISSN: 0018-9545, DOI: 10.1109/TVT.2019.2946420 [gefunden am 2019-12-16]

## Beschreibung

Die Erfindung betrifft ein Verfahren zum Übertragen einer Nachricht von einem Sendefahrzeug zu zumindest einem Empfängerfahrzeug über ein Funknetzwerk. Diese Nachricht soll mit dem geringstmöglichen Zeitverzug übertragen werden, weshalb sie im Weiteren als Eilnachricht bezeichnet wird. Die Erfindung stellt auch eine Sendeschaltung zum Aussenden einer solchen Eilnachricht und eine Empfangsschaltung zum Empfangen der Eilnachricht bereit. Schließlich umfasst die Erfindung ein Kraftfahrzeug, in welchem die Sendeschaltung und/oder die Empfangsschaltung bereitgestellt ist.

Kraftfahrzeuge können in einem autonomen Fahrbetrieb oder mithilfe einer Fahrerassistenzfunktion ihre Fahrmanöver koordinieren, indem sie über ein Funknetzwerk Nachrichten austauschen. So können die Kraftfahrzeuge beispielsweise einen Kolonnenbetrieb oder eine Kolonnenfahrt durchführen, in welcher synchronisierte gemeinsame Fahrmanöver stattfinden, z.B. gleichzeitige Beschleunigen oder Bremsen. Das Vorgeben des Fahrmanövers und dessen Synchronisation können in dem Funknetzwerk durch funkbasierte Nachrichten ermöglicht werden.

Der für solche Nachrichten im Funknetzwerk vorgegebene Funkstandard kann beispielsweise die so genannte V2V-Kommunikation (V2V - Vehicle to vehicle, Fahrzeug zu Fahrzeug) oder die V2X-Kommunikation sein (V2X - Vehicle to anything, Fahrzeug zu irgendeinem anderen Kommunikationspartner oder Teilnehmer des Funknetzwerks). Als Nachrichten können einfache Nachrichten vorgesehen sein, die nicht verbindungsorientiert sind, sondern nach dem Prinzip "fire and forget" (Sende und vergiss) ausgesendet werden, wonach keine Bestätigung über einen möglichen Empfang durch ein Empfängerfahrzeug abgewartet oder erwartet wird. Demgegenüber können komplexe Interaktionen vorgesehen sein, die einer verbindungsorientierten Kommunikation entsprechen und pro Kommunikationssequenz oder Verständigungsvorgang mindestens drei Nachrichten, beispielsweise drei V2X-Nachrichten vorsehen, wobei der Inhalt der zweiten und dritten und jeder weiteren Nachricht jeweils vom Inhalt zumindest einer vorangegangenen Nachricht abhängig ist, die von unterschiedlichen Kraftfahrzeugen und/oder anderen V2X-Teilnehmern (beispielsweise einer Sendebarke am Straßenrand) stammen können. Solche komplexen Interaktionen sind beispielsweise durch die 5GAA (5G Automotive Association) definiert. Hier wird eine Plattform oder ein Framework erarbeitet, das auf der so genannten Anwendungsschicht (application layer) ein Protokoll für die komplexen Interaktionen vorsieht. Protokolle für darunter liegenden Kommunikationsschichten oder Kommunikations-Layers (PHY, MAC, PDCP) werden durch die 5GAA nicht behandelt, aber neue technische Möglichkeiten, wie der Standard 5GNR-V2X (3GPPR16, RGPPR17) solcher Kommunikationsschichten werden berücksichtigt. So können Unicast- und Multicast-Übertragungen berücksichtigt werden und auch die zuverlässige Zustellung von Paketen, beispielsweise mittels Hybrid-automatic repeat request (HARQ) als Übertragungsschema.

Ein Grundproblem bei der Kommunikation auf der Applikationsschicht oder Application-Layer besteht darin, dass die komplexen Interaktionen, die Kraftfahrzeuge untereinander mittels mehrerer Nachrichten ausführen, stets davon ausgehen, dass alle Kraftfahrzeuge einer Fahrzeugkolonne oder alle Kraftfahrzeuge im Funknetzwerk allgemein Nachrichten betreffend das nächste Fahrmanöver empfangen und sich entsprechend verhalten. Dieser Anwendungsfall setzt also voraus, dass die Kraftfahrzeuge in der Planung der Fahrmanöver synchronisiert sind und die Fahrmanöver dann auch gemeinsam ausführen, auf die sie sich in einem Entscheidungsprozess einigen, z.B. das gleichzeitige Bremsen.

Es kann allerdings eine Fahrsituation geben, in welcher ein Kraftfahrzeug den Kolonnenbetrieb aussetzen muss, also beispielsweise nicht mehr am Funknetzwerk teilnehmen kann. Dies kann geschehen, wenn ein unerwartetes Ereignis eintritt, wie beispielsweise ein auf der Fahrbahn erscheinendes Hindernis oder ein medizinischer Notfall (wenn beispielsweise ein Fahrzeuginsasse körperliche Beschwerden hat). Das Kraftfahrzeug muss dann die im Kolonnenbetrieb fahrende Gruppe der Kraftfahrzeuge verlassen, also den kooperativen Betrieb mit den anderen Kraftfahrzeugen beenden. Ein solches Kraftfahrzeug kann dann nämlich entweder einer andere kooperativ fahrenden Fahrzeuggruppe beitreten, die aktuell relevanter für das Kraftfahrzeug ist, oder eigenständig Einzelaktionen nur für das Kraftfahrzeug selbst planen. Eine letzte Aufgabe der Kraftfahrzeugs im bisherigen kooperativen Fahrbetrieb besteht aber darin, die aktuelle Fahrzeuggruppe, der es angehört, über das Beenden des kooperativen Fahrbetriebs zu informieren, damit die übrigen Kraftfahrzeuge der Fahrzeuggruppe den dann unkoordinierten Fahrbetrieb dieses ausscheidenden Kraftfahrzeugs berücksichtigen können.

Da allerdings das Abbrechen des kooperativen Fahrbetriebs in der Regel in einer kritischen Situation stattfindet, in welchem hoher Kommunikationsbedarf besteht, also der Funkkanal des Funknetzwerks durch einen anderen Teilnehmer des Funknetzwerks belegt sein kann, weil auch die übrigen Kraftfahrzeuge untereinander kommunizieren müssen, kann die Eilnachricht, mittels welcher ein Kraftfahrzeug die Beendigung seines kooperativen Fahrbetriebs den übrigen Kraftfahrzeugen signalisieren möchte, verzögert werden.

Kraftfahrzeuge, die Nachrichten mittels eines Funknetzwerks untereinander austauschen, sind beispielsweise in der DE 10 2015 104 553 A1 beschrieben. Die Übertragung der Nachrichten erfolgt auf Basis einer synchronen Datenübertragung in vorgegebenen Zeitschlitzen. Wenn während eines Zeitschlitzes ein Teilnehmer des Funknetzwerks eine Nachricht aussendet, müssen die übrigen Teilnehmer des Funknetzwerks ihren Sendebetrieb unterdrücken. Somit können diese übrigen Teilnehmer keine Eilnachricht aussenden.

Aus der DE 10 2013 226 605 A1 ist eine Beschreibung der V2X-Kommunikation verfügbar. Gesendete Nachrichten werden hier als Botschaften bezeichnet.

Aus der EP 3 585 078 A1 ist in Zusammenhang mit der V2X-Kommunikation beschrieben, dass mittels dieser ein kooperativer Fahrbetrieb nicht nur für autonome Kraftfahrzeuge, sondern auch allgemein mittels Fahrassistenzeinrichtungen von Kraftfahrzeugen ermöglicht werden kann.

Eine wissenschaftliche Veröffentlichung von Watanabe et al. (WATANABE, Y.; SATO, K.; FUJII, T.: Poster: a scheduling method for V2V networks using successive interference cancellation. In: 2016 IEEE Vehicular Networking Conference (VNC). IEEE, 2016. S. 1-2. - ISSN 2157-9865) beschreibt, dass mittels einer Variante der SIC (successive interference cancellation) in einem Ad-hoc-Funknetzwerk von Kraftfahrzeugen ermittelt werden kann, welche Kraftfahrzeuge in einer Synchronisierungsphase gemäß dem Standard ALOHA gleichzeitig senden. Je nach Abstand zwischen den Kraftfahrzeugen weisen deren Signale bei den Empfangsfahrzeugen unterschiedliche Signalstärken auf, was dazu genutzt wird, zwei Kraftfahrzeuge im selben Zeitschlitz senden zu lassen, da sich deren Signale mittels des SIC bei allen Empfängerfahrzeugen wieder trennen lassen.

In der US 2011 / 0034 201 A1 ist beschrieben, dass eine Fahrzeug-zu-Fahrzeug-Kommunikation Paket-basiert erfolgen kann und hierfür Header von Datenpaketen definiert werden können.

In der US 2020 / 0064 140 A1 ist beschrieben, dass Kraftfahrzeuge in einem Konvoi fahren und dabei ein Ad-hoc-Funknetzwerk bilden können, um Fahrmanöver zu koordinieren. Fahrzeuge können dem Netzwerk beitreten oder dieses verlassen.

Der Erfindung liegt die Aufgabe zugrunde, über ein Funknetzwerk, das Kraftfahrzeuge untereinander betreiben, eine Eilnachricht von einem Sendefahrzeug zu zumindest einem Empfängerfahrzeug mit geringer Verzögerung zu übertragen.

Die Aufgabe wird durch die Gegenstände der unabhängigen Patentansprüche gelöst. Vorteilhafte Ausführungsformen der Erfindung sind durch die abhängigen Patentansprüche, die folgende Beschreibung sowie die Figuren beschrieben.

Ein Aspekt der Erfindung betrifft ein Verfahren zum Übertragen einer Eilnachricht von einem Sendefahrzeug zu zumindest einem Empfängerfahrzeug über ein Funknetzwerk, während in einem Funkkanal des Funknetzwerks bereits eine Normalnachricht von einem von dem Sendefahrzeug verschiedenen Teilnehmer des Funknetzwerks ausgesendet wird, wobei bei dem Verfahren eine Sendeschaltung des Sendefahrzeugs die Eilnachricht in dem Funkkanal mit einem Sendepegel aussendet, der kleiner als es in dem Funknetzwerk für das Versenden der Normalnachricht vorgesehen ist. Durch das Verfahren wird also davon ausgegangen, dass zu dem Zeitpunkt, zu welchem eine Eilnachricht ausgesendet werden soll, der Funkkanal bereits belegt sein kann. Diese hierbei übertragene Nachricht oder Botschaft wird als Normalnachricht bezeichnet. Mit Normalnachricht ist gemeint, dass der andere Teilnehmer des Funknetzwerks seine Normalnachricht regulär aussendet, weil für ihn der Funkkanal frei war oder er der erste war, der den Funkkanal zum Aussenden der Normalnachricht belegt hat. Die Normalnachricht ist insbesondere gemäß dem Funkstandard ausgesendet, das heißt ein Signalpegel und/oder eine Codierung ist durch den anderen Teilnehmer gemäß dem Funkstandard eingestellt oder festgelegt. Detektiert nun in dem Sendefahrzeug dessen Sendeschaltung, dass der Funkkanal bereits belegt ist, so wird dennoch die Eilnachricht nicht zurückgehalten, sondern die Eilnachricht wird der Normalnachricht überlagert oder superponiert, indem im selben Funkkanal, in welchem die Normalnachricht übertragen wird, auch die Eilnachricht als Überlagerungssignal mit einem Sendepegel kleiner als er gemäß dem Funkstandard für das Versenden einer Normalnachricht vorgesehen ist, ausgesendet wird. Mit anderen Worte ist der Signalpegel der Eilnachricht kleiner als der Signalpegel der Normalnachricht. Mit dem Begriff "Funkkanal" ist in der an sich bekannten Weise dasjenige Frequenzband gemeint, in welchem Nachrichten in dem Funknetzwerk versendet werden. Die Normalnachricht und die Eilnachricht belegen also im Frequenzspektrum denselben Funkkanal oder dasselbe Frequenzband. Sie bilden also ein Überlagerungssignal oder Superpositionssignal.

Für das jeweilige Empfängerfahrzeug sieht das Verfahren vor, dass eine jeweilige Empfangsschaltung des zumindest einen Empfängerfahrzeugs aus dem Funkkanal das Überlagerungssignal, welches die Normalnachricht und die Eilnachricht enthält, empfängt und aus dem Überlagerungssignal die Normalnachricht rekonstruiert und auf der Grundlage der rekonstruierten Normalnachricht einen Signalanteil der Normalnachricht an dem Überlagerungssignal modelliert und auf der Grundlage des Überlagerungssignals und des modellierten Signalanteils der Normalnachricht ein Restsignal, welches einen Unterschied zwischen dem Überlagerungssignal und dem modellierten Signalanteil beschreibt, ermittelt und auf der Grundlage des Restsignals die Eilnachricht rekonstruiert. Das Überlagerungssignal stellt also dasjenige Signal dar, das durch die Empfangsschaltung über die Antenne aus dem Funkkanal, also aus der Umgebung empfangen wird. Da die Eilnachricht mit einem geringeren Sendepegel ausgesendet wurde, stellt die Normalnachricht das stärkste Signal dar oder das dominante Signal, und die Empfangsschaltung kann die Normalnachricht in an sich bekannter Weise rekonstruieren, beispielsweise auf der Grundlage eines Korrelationsempfangs und/oder einer Decodierung. Die Normalnachricht weist denjenigen Sendepegel auf, wie er gemäß dem Funkstandard des Funknetzwerks für einen freien Funkkanal vorgesehen ist. Liegt die Normalnachricht dann separiert vor, so kann daraus ein künstliches Sendesignal erzeugt werden, wie es sich ergeben würde, wenn die Normalnachricht wieder ausgesendet werden sollte. Der Unterschied zwischen dem empfangenen Überlagerungssignal und diesem modellierten Signalanteil, den die Normalnachricht in dem Überlagerungssignal haben muss, ergibt ein Restsignal, das sich aus dem Signal der Eilnachricht und einem Kanalrauschen zusammensetzen muss. Da nun das dominierende Signal der Normalnachricht im Restsignal entfernt oder zumindest reduziert ist, kann wieder mit der an sich bekannten Methode für den Signalempfang, also beispielsweise Korrelationsempfang und/oder Decodierung, auch die Eilnachricht rekonstruiert werden. Mit Rekonstruieren ist gemeint, dass man aus einem Signalverlauf die digitalen Daten der jeweiligen Nachricht (Normalnachricht und Eilnachricht) extrahiert oder detektiert. Das Überlagerungssignal kann für das Ermitteln des Restsignals zwischengespeichert werden, bis der modellierte Signalanteil gebildet ist. Das Überlagerungssignal kann ein Empfangssignal im Frequenzbank des Funkkanals oder einer Zwischenfrequenz oder einem Basisband sein.

Durch die Erfindung ergibt sich der Vorteil, dass auch bei einem belegten Funkkanal keine Zeitverzögerung entsteht, wenn die Eilnachricht ausgesendet werden soll. Es muss nicht abgewartet werden, bis der Funkkanal wieder frei ist.

Bei der Erfindung wird zum Einstellen des Sendepegels ein Modem der Sendeschaltung angesteuert. Zusätzlich oder alternativ wird eine Antennen-Kompensationsschaltung abgeschaltet. Um einen Sendepegel für die Eilnachricht gezielt einzustellen, kann also ein Modem der Sendeschaltung angesteuert werden. Zusätzlich oder alternativ dazu kann mit besonders geringem technischen Aufwand beim Aussenden der Eilnachricht eine Antennen-Kompensationsschaltung abgeschaltet werden, welche einen Sendepegel für Normalnachrichten automatisiert anpasst. Hierdurch ergibt sich der besagte Sprung oder die besagte Reduzierung des Sendepegels um 6 Dezibel bis 10 Dezibel.

Die Erfindung umfasst auch Ausführungsformen, durch die sich zusätzliche Vorteile ergeben.

In einer Ausführungsform wird in dem jeweiligen Empfängerfahrzeug für das besagte Modellieren des Signalanteils der Normalnachricht aus Nachrichtendaten der rekonstruierten Normalnachricht ein Sendesignal des Teilnehmers, der die Normalnachricht ausgesendet hat, nachgebildet und das nachgebildete Sendesignal wird an einen Empfangspegel, den das empfangene Überlagerungssignal an der Empfangsschaltung aufweist, angepasst, um den Signalanteil zu ermitteln. Mit anderen Worten wird aus den Nachrichtendaten der rekonstruierten Normalnachricht ein künstliches Sendesignal erzeugt, also es wird der Empfangsprozess umgekehrt oder rückwärts durchlaufen, um einen zeitlichen Signalverlauf des Sendesignals und/oder dessen Spektrogramm zu erhalten. Zusätzlich wird berücksichtigt, dass jedes Empfängerfahrzeug einen anderen Empfangspegel der Normalnachricht beobachtet, da die Entfernung des jeweiligen Empfängerfahrzeugs von dem Teilnehmer, der die Normalnachricht ausgesendet hat, unterschiedlich ist, wodurch sich eine Dämpfung des Sendesignals des Teilnehmers unterscheidet. Daher wird der Empfangspegel des Überlagerungssignals dazu genutzt, das nachgebildete Sendesignal zu skalieren oder derart zu dämpfen, dass dessen Amplitude mit der Amplitude des Überlagerungssignals ein Übereinstimmungskriterium erfüllt. Das Übereinstimmungskriterium kann beispielsweise angeben, dass das Maxima des Überlagerungssignals mit dem Maxima des nachgebildeten Sendesignals übereinstimmen müssen und/oder eine Hüllkurve des Überlagerungssignals und eine Hüllkurve des nachgebildeten Sendesignals in Bezug auf die Amplitude angepasst werden. Eine zeitliche Synchronisation kann beispielsweise mittels einer Korrelation vorgesehen sein, um zunächst das nachgebildete Sendesignal zeitlich mit dem Überlagerungssignal zu synchronisieren.

In einer Ausführungsform wird in dem Funknetzwerk die Normalnachricht in einem vorgegebenen Zeitschlitz einer synchronen Datenübertragung gesendet. Die Sendeschaltung des Sendefahrzeug sendet dann seine Eilnachricht mit einem vorbestimmten Zeitversatz in Bezug zu einem Startzeitpunkt des Zeitschlitzes aus und die Empfangsschaltung untersucht zum Prüfen daraufhin, ob in dem Überlagerungssignal die Eilnachricht enthalten ist, in dem Überlagerungssignal einen solchen Signalabschnitt, der dem Startzeitpunkt des Zeitschlitzes zuzüglich des vorgesehenen Zeitversatzes entspricht, auf das Vorhandensein eines vorbestimmten Headers (Kopfdaten) einer möglichen Eilnachricht. Der Zeitversatz beträgt bevorzugt Null, um keine Zeit zu verlieren. Es wird also davon ausgegangen werden, dass eine synchrone Datenübertragung in Zeitschlitzen erfolgt. Die Sendeschaltung sendet die Eilnachricht in dem Zeitschlitz, in welchem auch die Normalnachricht übertragen wird. Insbesondere kann der besagte Zeitversatz null sein, sodass also die Sendeschaltung ihre Eilnachricht zum selben Zeitpunkt sendet wie auch der andere Teilnehmer seine Normalnachricht aussendet. Somit liegt also auch die Eilnachricht vollständig in dem Zeitschlitz. Indem in der Empfangsschaltung bekannt ist, mit welchem Zeitversatz die Sendeschaltung die Eilnachricht in den Zeitschlitz einfügt, also beispielsweise gleich ab Beginn des Zeitschlitzes (Zeitversatz beträgt 0), kann gezielt durch Detektieren des Headers (beispielsweise mittels Korrelation) überprüft werden, ob in einem Zeitschlitz überhaupt eine mögliche Eilnachricht enthalten ist. Der Header der Eilnachricht kann hierbei in der Empfangsschaltung bekannt sein, beispielsweise in einem Speicher und/oder in einer Korrelationsschaltung hinterlegt sein. Bei der Eilnachricht handelt es sich bevorzugt um eine Nachricht, deren Inhalt in der Empfangsschaltung bereits bekannt ist (so genannte wohlbekannte Nachricht - well-known message). Es handelt sich also nicht um den Inhalt der Eilnachricht selbst, der die Information überträgt, sondern um die Tatsache, dass die Eilnachricht überhaupt von einem Sendefahrzeug ausgesendet wurde, was eine Information für das jeweilige Empfängerfahrzeug darstellen kann. Statt einer Synchrondatenübertragung kann auch eine paketorientierte Datenübertragung vorgesehen sein.

In einer Ausführungsform sind in dem Funknetzwerk für das Versenden von Normalnachrichten mehrere Modulation-Coding-Schemata und/oder ein Numerology-Konzept vorgesehen und für die Eilnachricht wird daraus die Codierung mit der größten Redundanz und/oder ein ratenloses Codierschema verwendet. (Modulation-Coding-Schema, NR Numerology Concept) Der Funkstandard des Funknetzwerks kann also vorsehen, dass eine Coderate oder ein Anteil an Redundanz in einem jeweiligen Sendesignal einer Normalnachricht in Abhängigkeit von einem Rauschpegel angepasst werden kann, indem die Coderate aus mehreren möglichen, vorgegebenen Coderaten ausgewählt wird. Dies sind so genannte Modulation-Coding-Schemata und/oder Numerology Konzepte. Für die Eilnachricht wird dabei die Codierung mit der geringsten Coderate oder andersherum der größten Redundanz gewählt. Somit ist sichergestellt, dass trotz der Normalnachricht mit dem größeren Signal Sendepegel oder Signalpegel die Eilnachricht zuverlässig durch die jeweilige Empfangsschaltung rekonstruiert und/oder erkannt werden kann.

In einer Ausführungsform wird der Sendepegel der Eilnachricht um einen Faktor von 6 Dezibel bis 10 Dezibel kleiner eingestellt als der Sendepegel der Normalnachricht. Das besagte Werteintervall für den Sendepegel der Eilnachricht hat sich als besonders zuverlässig bewährt, um einerseits die fehlerfreie Rekonstruktion einer Normalnachricht zu ermöglichen (für welche die Eilnachricht ein zusätzliches Rauschen darstellt) als auch eine zuverlässige Rekonstruktion der Eilnachricht selbst zu erlauben. Das Einstellen des Sendepegels kann adaptiv erfolgen, in Abhängigkeit von einem durch die Sendeschaltung adaptierten Rauschpegel und/oder Empfangspegel der Normalnachricht.

In einer Ausführungsform betreiben das Sendefahrzeug und das zumindest eine Empfängerfahrzeug das Funknetzwerk als Ad-hoc-Netzwerk für einen kooperativen Fahrbetrieb und die Eilnachricht signalisiert, dass das Sendefahrzeug den kooperativen Fahrbetrieb abbricht und/oder das Ad-hoc-Netzwerk verlässt. Das Übertragen von einer Eilnachricht ist in der beschriebenen Weise insbesondere in einem Ad-hoc-Netzwerk wichtig, über welches Kraftfahrzeuge einen kooperativen Fahrbetrieb durchführen, also z.B. eine Kolonnenfahrt. Die Eilnachricht kann dann diejenige Nachricht sein, durch welche das Sendefahrzeug jedem Empfängerfahrzeug signalisiert, dass das Sendefahrzeug den kooperativen Fahrbetrieb abbricht und/oder sogar das Ad-hoc-Netzwerk verlässt.

Die Erfindung bezieht sich gemäß einem Aspekt auf eine Sendeschaltung für ein Kraftfahrzeug, wobei die Sendeschaltung eine Steuervorrichtung aufweist, die dazu eingerichtet ist, eine als eilig gekennzeichneten Nachricht in einen Funkkanal eines Funknetzwerks auszusenden und hierbei zu detektieren, ob der Funkkanal durch eine Übertragung einer Normalnachricht eines anderen Teilnehmers belegt ist, und in diesem Fall die Nachricht als Eilnachricht in dem Funkkanal mit einem Sendepegel auszusenden, der kleiner als es gemäß einem Funkstandard des Funknetzwerks für das Versenden der Normalnachricht vorgesehen ist. Mittels der Sendeschaltung können also diejenigen Verfahrensschritte durchgeführt werden, die das Sendefahrzeug betreffen. Die Sendeschaltung kann auch in der beschriebenen Weise weitergebildet werden, indem zusätzliche Merkmale, wie sie bereits in Zusammenhang mit den Ausführungen des erfindungsgemäßen Verfahrens beschrieben wurden, auch in der Sendeschaltung implementiert sind.

Die Erfindung bezieht sich gemäß einem Aspekt auf eine Empfangsschaltung für ein Kraftfahrzeug, wobei die Empfangsschaltung dazu eingerichtet ist, aus einem Funkkanal eines Funknetzwerks ein Überlagerungssignal, welches eine Normalnachricht und eine Eilnachricht enthält, zu empfangen und aus dem Überlagerungssignal die Normalnachricht zu rekonstruieren und auf der Grundlage der rekonstruierten Normalnachricht einen Signalanteil der Normalnachricht an dem Überlagerungssignal zu modellieren und auf der Grundlage des Überlagerungssignals und des modellierten Signalanteils der Normalnachricht ein Restsignal, welches einen Unterschied zwischen dem Überlagerungssignal und dem modellierten Signalanteil beschreibt, zu ermitteln und auf der Grundlage des Restsignals die Eilnachricht zu rekonstruieren. Die Empfangsschaltung kann also diejenigen Verfahrensschritte einer Ausführungsform des erfindungsgemäßen Verfahrens durchführen, die für das jeweilige Empfängerfahrzeug vorgesehen sind.

Die Sendeschaltung und/oder die Empfangsschaltung können hierbei jeweils eine Steuerschaltung aufweisen, um die beschriebenen Verfahrensschritte auszuführen und/oder auszulösen oder zu steuern. Die Steuerschaltung kann eine Datenverarbeitungsvorrichtung oder eine Prozessoreinrichtung aufweisen, die dazu eingerichtet ist, eine Ausführungsform des erfindungsgemäßen Verfahrens durchzuführen. Die Prozessoreinrichtung kann hierzu zumindest einen Mikroprozessor und/oder zumindest einen Mikrocontroller und/oder zumindest einen FPGA (Field Programmable Gate Array) und/oder zumindest einen DSP (Digital Signal Processor) aufweisen. Des Weiteren kann die Prozessoreinrichtung Programmcode aufweisen, der dazu eingerichtet ist, bei Ausführen durch die Prozessoreinrichtung die Ausführungsform des erfindungsgemäßen Verfahrens durchzuführen. Der Programmcode kann in einem Datenspeicher der Prozessoreinrichtung gespeichert sein.

Die Erfindung bezieht sich gemäß einem Aspekt auf ein Kraftfahrzeug mit einer Ausführungsform der erfindungsgemäßen Sendeschaltung und/oder mit einer Ausführungsform der erfindungsgemäßen Empfangsschaltung. Das erfindungsgemäße Kraftfahrzeug ist bevorzugt als Kraftwagen, insbesondere als Personenkraftwagen oder Lastkraftwagen, oder als Personenbus oder Motorrad ausgestaltet. Das erfindungsgemäße Kraftfahrzeug kann also als Sendefahrzeug und/oder (in einer anderen Fahrsituation) als Empfängerfahrzeug für einen kooperativen Fahrbetrieb betrieben werden.

Die Erfindung umfasst auch die Kombinationen der Merkmale der beschriebenen Ausführungsformen. Die Erfindung umfasst also auch Realisierungen, die jeweils eine Kombinationen der Merkmale mehrerer der beschriebenen Ausführungsformen aufweisen, sofern die Ausführungsformen nicht als sich gegenseitig ausschließend beschrieben wurden.

Im Folgenden sind Ausführungsbeispiele der Erfindung beschrieben. Hierzu zeigt:
- Fig. 1: eine schematische Darstellung von Ausführungsformen des erfindungsgemäßen Kraftfahrzeugs; und
- Fig. 2: ein Flussschaudiagramm zur Veranschaulichung einer Ausführungsform des erfindungsgemäßen Verfahrens.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

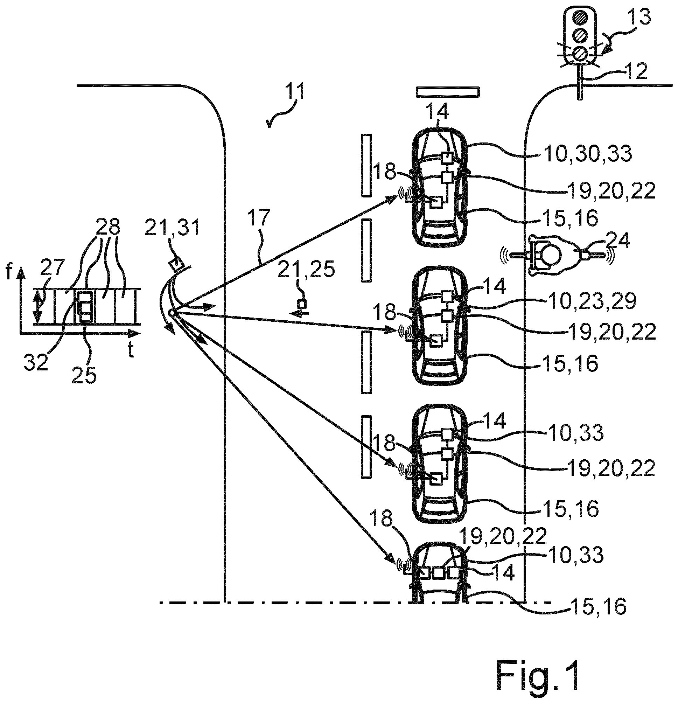

Fig. 1 zeigt Kraftfahrzeuge 10, die auf einer Straße 11 fahren können. Dargestellt ist eine beispielhafte Situation, bei welcher die Kraftfahrzeuge 10 zunächst an einer Ampel 12 gewartet haben und durch einen Phasenwechsel 13 der Ampel 12 diese auf grün gesprungen ist, sodass die Kraftfahrzeuge 10 losfahren dürfen. In den Kraftfahrzeugen 10 kann eine Fahrerassistenzfunktion 14 bereitgestellt sein, die als autonome Fahrfunktion oder als Fahrer-unterstützende Funktion, beispielsweise ACC (Automatic Cruise Control), ausgestaltet sein kann. Mittels der Fahrerassistenzfunktion 14 können die Kraftfahrzeuge 10 beispielsweise als Kolonne 15 koordiniert fahren oder allgemein mittels der Fahrerassistenzfunktion 14 einen koordinierten Fahrbetrieb 16 ausführen. Ein Beispiel für einen anderen koordinierten Fahrbetrieb 16 ist an einer Kreuzung möglich, wo Kraftfahrzeuge 10 die Vorfahrt automatisiert beachten. In dem koordinierten Fahrbetrieb 16 als Kolonne 15 kann beispielsweise vorgesehen sein, nachdem Phasenwechsel 13 die Kraftfahrzeuge 10 gemeinsam anfahren oder beschleunigen zu lassen, sodass sie als Schlange oder Kolonne in Bewegung gesetzt werden.

Für den koordinierten Fahrbetrieb 16 können die Kraftfahrzeuge 10 über ein Funknetzwerk 17 miteinander gekoppelt oder koordiniert sein, um Fahrmanöver zu koordinieren. Beispielsweise kann ein Beschleunigungswert für das Anfahren zwischen den Kraftfahrzeugen 10 abgestimmt werden. Jedes Kraftfahrzeug 10 kann hierzu eine Kommunikationsschaltung 18 aufweisen, die beispielsweise auf der Grundlage von WIFI oder Mobilfunk das Funknetzwerk 17 betreiben kann. Der Funkkanal 27 kann insbesondere auf dem V2X-Kommunikationsstandard beruhen. Bei dem Funknetzwerk 17 kann es sich beispielsweise um ein Ad-hoc-Netzwerk handeln, an welchem Kraftfahrzeuge 10 teilnehmen können, die sich in einem gemeinsamen Sendebereich befinden, sich also direkt über Funkverbindungen (ohne Vermittlung eines Mobilfunknetzwerks oder eines anderen stationären Netzwerks) erreichen können. Die jeweilige Kommunikationsschaltung 18 kann mit der Fahrerassistenzfunktion 14 über eine Steuerschaltung 19 gekoppelt sein, welche als Sendeschaltung 20 zum Aussenden von Nachrichten 21 und/oder als Empfangsschaltung 22 zum Empfangen von Nachrichten 21 ausgestaltet sein kann.

Der koordinierte Fahrbetrieb 16 setzt voraus, dass jedes der Kraftfahrzeuge 10, welches daran teilnimmt, das jeweils vereinbarte Fahrmanöver auch tatsächlich kennt und ausführen kann. In Fig. 1 ist eine beispielhafte Situation dargestellt, bei welcher für eines der Kraftfahrzeuge 10 (hier als Kraftfahrzeug 23 bezeichnet) ein unvorhergesehenes Verkehrshindernis 24 das Ausführen eines koordinierten Fahrmanövers unmöglich macht. Als Verkehrshindernis 24 kann beispielsweise ein Fußgänger oder Radfahrer in den Fahrweg des Kraftfahrzeugs 23 geraten sein. Damit die übrigen Kraftfahrzeuge 10 berücksichtigen können, dass trotz des vereinbarten Fahrmanövers das Kraftfahrzeug 23 dieses Fahrmanöver nicht ausführen wird und/oder keine weiteren koordinierten Fahrmanöver ausführen wird, muss das Kraftfahrzeug 23 die übrigen Kraftfahrzeuge 10 mittels einer Eilnachricht 25 darüber informieren, dass es den koordinierten Fahrbetrieb 16 abbricht, also nicht mehr zur Kolonne 15 gehört oder mit dieser nicht mehr koodiniert ist.

Hierzu kann ein Funkkanal 27 des Funknetzwerks 17 genutzt werden. Ein Funkkanal 27 kann ein Frequenzbereich sein. Über der Zeit t kann die Eilnachricht in den Funkkanal 27 ausgesendet werden. In Fig. 1 ist beispielhaft gezeigt, wie über der Zeit t und der Frequenz f sich der Funkkanal 27 ergibt. Das Aussenden von Nachrichten 21 in den Funkkanal 27 kann für das Funknetzwerk 17 in Zeitschlitzen 28 vorgesehen oder vorgegeben sein, was sich durch den verwendeten Funkstandard ergeben kann.

Fig. 1 zeigt, wie sich die Situation ergeben kann, dass zu dem Zeitpunkt oder Zeitraum, zu welchem das Kraftfahrzeug 23 als Sendefahrzeug 29 die Eilnachricht 25 im Funknetzwerk 17 aussenden muss, bereits ein anderes Kraftfahrzeug als weiterer Teilnehmer 30 des Funknetzwerks 17 eine Normalnachricht 31 aussendet. Mit Normalnachricht ist gemeint, dass der Teilnehmer 30 den Funkkanal 27 für sich beanspruchen darf, wie es sich gemäß dem Protokoll oder Funkstandard des Funknetzwerks 17 ergeben hat. Somit ist also der Funkkanal 27 durch die Normalnachricht 31 belegt, wenn das Sendefahrzeug 29 an die übrigen Kraftfahrzeuge seine Eilnachricht 25 aussenden muss. Die übrigen Kraftfahrzeuge 10 werden hier zur Unterscheidung als Empfängerfahrzeuge 33 bezeichnet. Bei den Kraftfahrzeugen 10 kann hierbei durch die Ausgestaltung der Steuerschaltung 19 ermöglicht sein, dass dennoch die Eilnachricht 25 ohne Verzögerung, das heißt ohne Abwarten bis die Normalnachricht 31 nicht mehr den Funkkanal 27 belegt, ausgesendet werden kann.

Fig. 1 veranschaulicht, wie über die Zeit t in dem fraglichen Zeitschlitz 28 eine Superposition aus der Normalnachricht 32 und der Eilnachricht 25 entsteht, indem das Sendefahrzeug 29 mit seiner Sendeschaltung 20 die Eilnachricht 25 der Normalnachricht 32 superponiert oder überlagert, indem diese Zeitgleich versendet wird. Beispielsweise kann zeitschlitzgenau der gesamte Zeitschlitz 28 sowohl für die Normalnachricht 32 als auch die Eilnachricht 25 vorgesehen werden. Auch im Frequenzbereich können sich die beiden Nachrichten (Normalnachricht 31 und Eilnachricht 25) zumindest teilweise überschneiden.

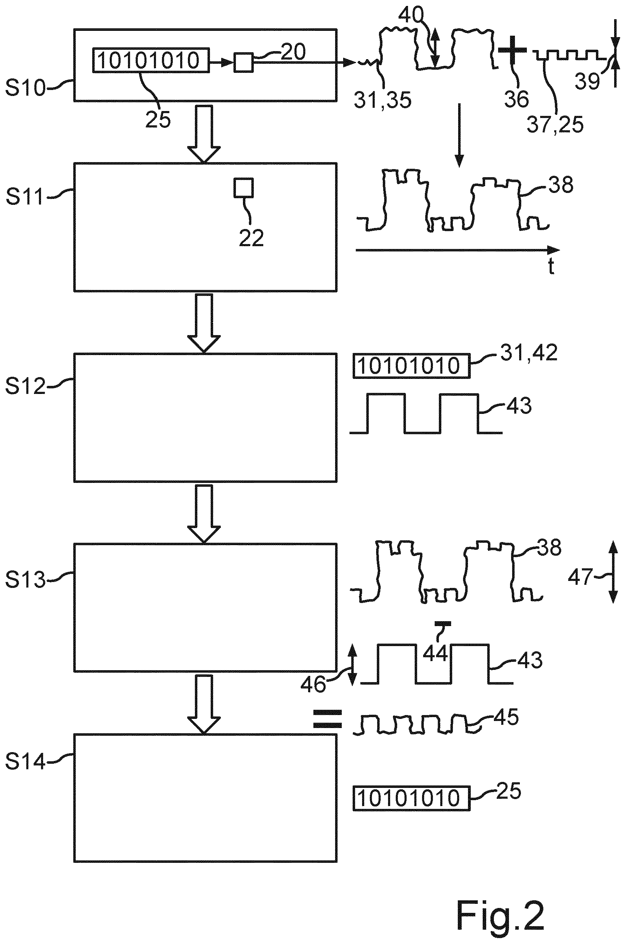

Fig. 2 veranschaulicht, wie dennoch die Eilnachricht 25 durch eine Empfangsschaltung 22 in jedem der Empfängerfahrzeuge 33 empfangen werden kann. In einem Schritt S10 kann die Sendeschaltung 20 die Eilnachricht 25 empfangen. Die Eilnachricht 25 ist hier durch Nachrichtendaten beispielhaft in Form einer Bildfolge veranschaulicht. Obwohl in dem Funkkanal 27 die Normalnachricht 31 als ein Sendesignal 35 eines Teilnehmers 30 enthalten ist, kann durch Überlagern 36 oder superpositionieren das Sendesignal 37 der Eilnachricht 25 ebenfalls ausgesendet werden. Hierdurch ergibt sich ein Überlagerungssignal 38 (Superpositionssignal). Ein Sendepegel 39 des Sendesignals 37 der Eilnachricht 25 wird hierbei kleiner gewählt als ein Sendepegel 40, wie er für die Sendeschaltung 20 zum Aussenden einer Normalnachricht eigentlich vorgesehen ist.

In einem Schritt S11 kann durch eine jeweilige Empfangsschaltung 22 eines Empfängerfahrzeugs 33 das Überlagerungssignal 38 empfangen werden. Es ist eine Mischung oder Überlagerung aus dem Sendesignal 35 der Normalnachricht, dem Sendesignal 37 der Eilnachricht 25 und einem Kanalrauschen oder Rauschsignal.

Da allerdings das Sendesignal 35 der Normalnachricht 31 dominant ist, kann es in einem Schritt S12 durch die Empfangsschaltung 22 dekodiert werden, wobei die Eilnachricht 25, das heißt deren Sendesignal 37 als Rauschen betrachtet wird. Somit kann die Normalnachricht 31 rekonstruiert werden, sodass sich eine rekonstruierte Normalnachricht 42 ergibt. Die rekonstruierte Normalnachricht 42, das heißt deren Daten, können dazu genutzt werden, ein künstliches oder nachgebildetes Sendesignal 43 zu erzeugen. Es kann hierzu die Umwandlung der Daten der Normalnachricht 31 hin zu einem analogen Funksignal nachgebildet werden, wozu ein digitales Modell verwendet werden kann, das beispielsweise die Wandlungsvorgänge in einer Sendeschaltung 20 nachbildet. Somit liegt ein Signalverlauf und/oder ein Signalspektrum der Normalnachricht 31 als nachgebildetes Sendesignal 43 vor. In einem Schritt S13 kann von dem empfangenen Überlagerungssignal 38 das nachgebildete Sendesignal 43 beispielsweise mittels einer Subtraktion 44 entfernt oder abgezogen werden. Es ergibt sich somit ein Unterschied zwischen dem (idealen) nachgebildeten Sendesignal 43 und dem Überlagerungssignal 38. Dieser Unterschied stellt ein Restsignal 45 dar, das noch das Rauschen und das Sendesignal 43 der Eilnachricht 25 enthält. Hierbei kann auch ein Pegel 46 des nachgebildeten Sendesignals 43 an einem Empfangspegel 47 des Überlagerungssignals 38 angepasst werden.

Auf Grundlage des Restsignals 45 kann in einer weiteren Dekodierung die Eilnachricht 25, das heißt deren Daten, in einem Schritt S14 decodiert werden.

Somit liegt also in der Empfangsschaltung 22 dann sowohl die Normalnachricht 41 als auch die Eilnachricht 25 vor.

Auf Grundlage der Eilnachricht kann dann die Fahrerassistenzfunktion 14 des Empfängerfahrzeugs 33 dahingehend konfiguriert oder angepasst werden, dass berücksichtigt ist, dass das Sendefahrzeug 29 nicht mehr am koordinierten Fahrbetrieb 16 teilnimmt. Beispielsweise kann ein Sicherheitsabstand zu dem Sendefahrzeug 29 vorgegeben werden und/oder berücksichtigt werden, dass das Sendefahrzeug 29 als nicht-kooperativer Verkehrsteilnehmer beispielsweise bei einer Trajektorienplanung zu berücksichtigen ist.

Die Idee ist also, die Eilnachricht 25 synchron mit der den Funkkanal belegenden Normalnachricht eines anderen Teilnehmers auszusenden. Das Aussenden der Eilnachricht erfolgt mit geringerer Leistung als gemäß dem Funkstandard vorgesehen und zudem mit der maximal verfügbaren Redundanz. Um die geringere Leistung einzustellen, kann beispielsweise ein Modem der Sendeschaltung angesteuert werden, und/oder ein Fahrzeugantennenkompensator abgeschaltet werden. Bevorzugt wird hier eine Reduktion von 6 Dezibel bis 10 Dezibel relativ zu einer regulären Nachricht gemäß dem V2X-Kommunikationsstandard bewirkt. Es kann das niedrigste Modulation-Coding-Scheme MCS verwendet werden, um Robustheit oder Redundanz zu erhalten. Die Angabe MCS ist hier für den Mobilfunkstandard LTE zu verstehen, es können aber auch andere MSC-Konfigurationen vorgesehen sein. Im Fall von NR-V2X, kann das robusteste Numerology-Konzept verwendet werden. Falls möglich kann auch vorgesehen sein, für mehrere Übertragungen im selben belegten Funkkanal ein ratenloses Codierschema (rateless coding scheme) auf einer höheren Kommunikations-Schicht (layer), beispielsweise der Anwendungsschicht oder der Netzwerkschicht, anzuwenden.

Dies ergibt für die Empfängerfahrzeuge im Funknetzwerk eine Superposition oder ein Überlagerungssignal der verwendeten Normalnachricht und der zugleich versendeten Eilnachricht. Mit der Eilnachricht kann somit zeitgleich mit der Normalnachricht signalisiert werden, dass bei dem Sendefahrzeug 29 ein Phasenübergang (Verlasen des koordinierten Fahrbetriebs) vorgenommen wird. Die jeweilige Empfangsschaltung eines Empfängerfahrzeugs kann das Überlagerungssignal durch ein hierarchisches Dekodieren oder iteratives Dekodieren mit Feeback (in Form des nachgebildeten Sendesignals) gemäß den beschriebenen Schritten S11 bis S14 durchführen. Dies entspricht einer Dekodierung nach dem Typ Decision-Feedback-Decoding. Hierdurch kann erkannt werden, ob sich in einem Zeitschlitz 28 zusätzlich zu einer normalen Nachricht auch eine Eilnachricht befindet.

Bevorzugt wird als Eilnachricht eine derart kurze Nachricht (Datenmenge) verwendet, dass eine zeitliche Dauer zum Versenden der Eilnachricht zusammen mit der in Redundanz-Bits der Zeitdauer des Zeitschlitzes entspricht oder kürzer als dieser ist. Bei einer regulären Nachricht oder Normalnachricht gemäß dem V2X-Standard, wie zum Beispiel einer BSM (basic safety message) ist eine Datenmenge von 120 Bytes möglich, sodass eine sehr viel kürzere Nachricht, beispielsweise weniger als 40 Bytes, zusammen mit der entsprechenden Redundanz in einem Zeitschlitz 28 als Eilnachricht versendet werden kann. Falls synchrone Datenübertragung vorgesehen ist, kann ein Zeitversatz zwischen Normalnachricht und Eilnachricht gemäß einer Vorgabe gewählt werden, die sowohl im Sendefahrzeug 29 als auch in jedem Empfängerfahrzeug 33 bekannt sein kann, sodass ein Header der Eilnachricht im Restsignal 45 gezielt gesucht oder detektiert werden kann. Wird an der vorgegebenen Stelle im Zeitschlitz, insbesondere an deren Anfange, ein solcher Header nicht detektiert, so kann davon ausgegangen werden, dass in dem Zeitschlitz keine Eilnachricht enthalten ist.

V2X-Kommunikations verwendet keine zentrale Planungseinheit, sondern es müssen die Teilnehmer herausfinden, ob der Funkkanal frei oder besetzt ist. C-V2X und 5G NR-V2X verwenden eine semipersistente Planung, bei der das Gerät den Kanal durch Messungen überwacht. Vor der Übertragung einer Nachricht 21 ist in der Sendeschaltung bekannt, ob der Kanal belegt oder frei sein wird.

Muss eine Eilnachricht 25 versendet werden, so wird sich höchstwahrscheinlich das Fahrzeug in der folgenden Situation befinden: Es muss andere Fahrzeuge über seinen Übergang von einem kooperativen Fahrbetrieb zu einem einzelnen Manöver informieren oder der V2X-Funkkanal ist belegt, da eine unerwartete Situation eingetreten ist und viele Fahrzeuge versuchen zu kommunizieren. Daher ist es erforderlich, trotz des besetzten Funkkanals eine Nachricht für alle Fahrzeuge in der Umgebung zu hinterlassen.

Insgesamt zeigen die Beispiele, wie ein Phasenübergang bei komplexen V2X-Kommunikationsvorgängen bereitgestellt werden kann.

## Patentansprüche

1. Verfahren zum Übertragen einer Eilnachricht (25) von einem Sendefahrzeug (29) zu zumindest einem Empfängerfahrzeug (33) über ein Funknetzwerk (17), während in einem Funkkanal (27) des Funknetzwerks (17) bereits eine Normalnachricht (31) von einem von dem Sendefahrzeug (29) verschiedenen Teilnehmer (30) des Funknetzwerks ausgesendet wird, wobei bei dem Verfahren
- eine Sendeschaltung (20) des Sendefahrzeugs (29) die Eilnachricht (25) in dem Funkkanal mit einem Sendepegel (39) aussendet, der kleiner als ein Sendepegel (40) der Normalnachricht (31) ist, wobei zum Einstellen des Sendepegels (39) der Eilnachricht (25) ein Modem der Sendeschaltung (20) angesteuert wird und/oder eine Antennen-Kompensationsschaltung abgeschaltet wird, und
- eine jeweilige Empfangsschaltung (22) des zumindest einen Empfängerfahrzeugs (33) aus dem Funkkanal (27) ein Überlagerungssignal (38), welches die Normalnachricht (31) und die Eilnachricht (25) enthält, empfängt und aus dem Überlagerungssignal (38) die Normalnachricht (31) rekonstruiert und auf der Grundlage der rekonstruierten Normalnachricht (42) einen Signalanteil der Normalnachricht (31) an dem Überlagerungssignal (38) modelliert und auf der Grundlage des Überlagerungssignals (38) und des modellierten Signalanteils der Normalnachricht (31) ein Restsignal (45), welches einen Unterschied zwischen dem Überlagerungssignal (38) und dem modellierten Signalanteil beschreibt, ermittelt und auf der Grundlage des Restsignals (45) die Eilnachricht (25) rekonstruiert.

2. Verfahren nach Anspruch 1, wobei zum Modellieren des Signalanteils (43) aus Nachrichtendaten der rekonstruierten Normalnachricht (42) ein Sendesignal (43) des Teilnehmers (30) nachgebildet wird und das nachgebildete Sendesignal (43) an einen Empfangspegel (47), den das Überlagerungssignal (38) an der Empfangsschaltung (22) aufweist, angepasst wird, um den Signalanteil zu ermitteln.

3. Verfahren nach einem der vorhergehenden Ansprüche, wobei in dem Funknetzwerk (17) die Normalnachricht (31) in einem vorgegebenen Zeitschlitz (28) einer synchronen Datenübertragung gesendet wird und die Sendeschaltung (20) die Eilnachricht (25) mit einem vorbestimmten Zeitversatz in Bezug zu einem Startzeitpunkt des Zeitschlitzes (28) aussendet und die Empfangsschaltung (22) zum Prüfen, ob in dem Überlagerungssignal (38) die Eilnachricht (25) enthalten ist, in dem Überlagerungssignal (38) einen solchen Signalabschnitt, der dem Startzeitpunkt des Zeitschlitzes (28) zuzüglich des vorgesehenen Zeitversatzes entspricht, auf das Vorhandensein eines vorbestimmten Headers einer möglichen Eilnachricht (25) hin untersucht.

4. Verfahren nach einem der vorhergehenden Ansprüche, wobei in dem Funknetzwerk (17) für das Versenden von Normalnachrichten (31) mehrere Modulation-Coding-Schemata und/oder ein Numerology-Konzept vorgesehen sind und für die Eilnachricht (25) daraus die Codierung mit der größten Redundanz und/oder ein ratenloses Codierschema verwendet wird.

5. Verfahren nach einem der vorhergehenden Ansprüche, wobei der Sendepegel der Eilnachricht (25) um einen Faktor von 6 Dezibel bis 10 Dezibel kleiner eingestellt wird als der Sendepegel (40) der Normalnachricht (31).

6. Verfahren nach einem der vorhergehenden Ansprüche, wobei das Sendefahrzeug (29) und das zumindest eine Empfängerfahrzeug (33) das Funknetzwerk (17) als Ad-hoc-Netzwerk für einen kooperativen Fahrbetrieb (16) betreiben und die Eilnachricht (25) signalisiert, dass das Sendefahrzeug (29) den kooperativen Fahrbetrieb abbricht und/oder das Ad-hoc-Netzwerk verlässt.

7. Sendeschaltung (20) für ein Kraftfahrzeug (10), wobei die Sendeschaltung (20) eine Steuervorrichtung aufweist, die dazu eingerichtet ist, eine als eilig gekennzeichneten Nachricht in einen Funkkanal (27) eines Funknetzwerks (17) auszusenden und hierbei zu detektieren, ob der Funkkanal (27) durch eine Übertragung einer Normalnachricht (31) eines anderen Teilnehmers (30) belegt ist, und in diesem Fall die Nachricht als Eilnachricht (25) in dem Funkkanal (27) mit einem Sendepegel (39) auszusenden, der kleiner als eine Sendepegel (40) der Normalnachricht (31) ist, und zum Einstellen des Sendepegels (39) der Eilnachricht (25) ein Modem der Sendeschaltung (20) anzusteuern und/oder eine Antennen-Kompensationsschaltung abzuschalten.

8. Kraftfahrzeug (10) mit einer Sendeschaltung (20) nach Anspruch 7.

## Claims

1. Method for transmitting an urgent message (25) from a transmitting vehicle (29) to a least one receiving vehicle (33) via a radio network (17), while a normal message (31) is already being transmitted in a radio channel (27) of the radio network (17) by a subscriber (30) of the radio network different from the transmitting vehicle (29), wherein in the method
- a transmission circuit (20) of the transmitting vehicle (29) transmits the urgent message (25) in the radio channel at a transmission level (39) which is lower than a transmission level (40) of the normal message (31), wherein a modem of the transmission circuit (20) is controlled and/or an antenna compensation circuit is switched off in order to set the transmission level (39) of the urgent message (25), and
- a respective receiving circuit (22) of the at least one receiving vehicle (33) receives from the radio channel (27) a heterodyne signal (38) which contains the normal message (31) and the urgent message (25) and reconstructs the normal message (31) from the heterodyne signal (38) and, on the basis of the reconstructed normal message (42) models a signal component of the normal message (31) on the heterodyne signal (38) and, on the basis of the heterodyne signal (38) and the modelled signal component of the normal message (31) determines a residual signal (45) which describes a difference between the heterodyne signal (38) and the modelled signal component, and on the basis of the residual signal (45) reconstructs the urgent message (25).

2. Method according to claim 1, wherein for modelling the signal component (43) from message data of the reconstructed normal message (42) a transmission signal (43) of the subscriber (30) is simulated and the simulated transmission signal (43) is adapted to a receiving level (47), which the heterodyne signal (38) at the receiving circuit (22) has, in order to determine the signal component.

3. Method according to any of the preceding claims, wherein in the radio network (17) the normal message (31) is transmitted in a predetermined time slot (28) of a synchronous data transmission and the transmission circuit (20) transmits the urgent message (25) with a predetermined time offset with respect to a start time of the time slot (28) and the receiving circuit (22) for checking whether the urgent message (25) is contained in the heterodyne signal (38) examines in the heterodyne signal (38) such a signal section which corresponds to the start time of the time slot (28) plus the intended time offset for the presence of a predetermined header of a possible urgent message (25).

4. Method according to any of the preceding claims, wherein several modulation coding schemes and/or a numerology concept are provided in the radio network (17) for sending normal messages (31) and the coding with the greatest redundancy and/or a rateless coding scheme is used for the urgent message (25) therefrom.

5. Method according to any of the preceding claims, wherein the transmission level of the urgent message (25) is set lower than the transmission level (40) of the normal message (31) by a factor of 6 decibels to 10 decibels.

6. Method according to any of the preceding claims, wherein the transmitting vehicle (29) and the at least one receiving vehicle (33) operate the radio network (17) as an ad hoc network for a cooperative driving operation (16) and the urgent message (25) signals that the transmitting vehicle (29) aborts the cooperative driving operation and/or leaves the ad hoc network.

7. Transmission circuit (20) for a motor vehicle (10), wherein the transmission circuit (20) has a control device which is configured to transmit a message identified as urgent into a radio channel (27) of a radio network (17) and in the process to detect whether the radio channel (27) is occupied by a transmission of a normal message (31) from another subscriber (30), and in this case to transmit the message as an urgent message (25) in the radio channel (27) with a transmission level (39) which is lower than a transmission level (40) of the normal message (31) and to control a modem of the transmission circuit (20) and/or switch off an antenna compensation circuit in order to set the transmission level (39) of the urgent message (25).

8. Motor vehicle (10) with a transmission circuit (20) according to claim 7.

## Revendications

1. Procédé de transmission d'un message urgent (25) à partir d'un véhicule émetteur (29) vers au moins un véhicule récepteur (33) par l'intermédiaire d'un réseau radio (17), tandis qu'un message normal (31) est déjà émis sur un canal radio (27) du réseau radio (17) par un abonné (30), différent du véhicule émetteur (29), du réseau radio, dans lequel, selon ledit procédé,
- un circuit émetteur (20) du véhicule émetteur (29) émet le message urgent (25) sur le canal radio avec un niveau d'émission (39) inférieur à un niveau d'émission (40) du message normal (31), dans lequel un modem du circuit émetteur (20) est commandé et/ou un circuit de compensation d'antenne est désactivé afin d'ajuster le niveau d'émission (39) du message urgent (25), et
- un circuit récepteur (22) respectif du au moins un véhicule récepteur (33) reçoit sur le canal radio (27) un signal superposé (38) contenant le message normal (31) et le message urgent (25) et reconstruit le message normal (31) à partir du signal superposé (38) et modélise une composante de signal du message normal (31) au niveau du signal superposé (38) en se basant sur le message normal (42) reconstruit et détermine un signal résiduel (45) décrivant une différence entre le signal superposé (38) et la composante de signal modélisée en se basant sur le signal superposé (38) et la composante de signal modélisée du message normal (31) et reconstruit le message urgent (25) en se basant sur le signal résiduel (45).

2. Procédé selon la revendication 1, dans lequel un signal d'émission (43) de l'abonné (30) est reproduit à partir des données de message du message normal (42) reconstruit afin de modéliser la composante de signal (43), et le signal d'émission (43) reproduit est adapté au niveau de réception (47) que présente le signal superposé (38) au niveau du circuit de réception (22) afin de déterminer la composante de signal.

3. Procédé selon l'une quelconque des revendications précédentes, dans lequel, au sein du réseau radio (17), le message normal (31) est émis dans un créneau temporel (28) prédéfini d'une transmission synchrone de données et le circuit d'émission (20) émet le message urgent (25) avec un décalage temporel prédéterminé par rapport à un instant de début du créneau temporel (28), et le circuit récepteur (22), afin de vérifier si le message urgent (25) est contenu dans le signal superposé (38), recherche, au sein du signal superposé (38), la présence d'un en-tête prédéterminé d'un possible message urgent (25) dans une section de signal correspondant à l'instant de début du créneau temporel (28) auquel s'ajoute le décalage temporel prévu.

4. Procédé selon l'une quelconque des revendications précédentes, dans lequel plusieurs schémas de codage de modulation et/ou un concept numérologique est/sont prévu(s) au sein du réseau radio (17) pour l'envoi de messages normaux (31) et le codage avec la redondance la plus élevée et/ou un schéma de codage sans débit est/sont utilisé(s) pour le message urgent (25) qui en résulte.

5. Procédé selon l'une quelconque des revendications précédentes, dans lequel le niveau d'émission du message urgent (25) est ajusté d'un facteur compris entre 6 décibels et 10 décibels en dessous du niveau d'émission (40) du message normal (31).

6. Procédé selon l'une quelconque des revendications précédentes, dans lequel le véhicule émetteur (29) et le au moins un véhicule récepteur (33) utilisent le réseau radio (17) en tant que réseau ad hoc pour un fonctionnement en conduite coopérative (16) et le message urgent (25) signale que le véhicule émetteur (29) interrompt le fonctionnement en conduite coopérative et/ou quitte le réseau ad hoc.

7. Circuit d'émission (20) destiné à un véhicule automobile (10), dans lequel le circuit d'émission (20) présente un dispositif de commande conçu pour émettre un message identifié comme urgent sur un canal radio (27) d'un réseau radio (17) et détecter ainsi si le canal radio (27) est occupé par une transmission d'un message normal (31) d'un autre abonné (30) et, auquel cas, émettre le message sous la forme d'un message urgent (25) sur le canal radio (27) avec un niveau d'émission (39) inférieur à un niveau d'émission (40) du message normal (31), et commander un modem du circuit d'émission (20) et/ou désactiver un circuit de compensation d'antenne afin d'ajuster le niveau d'émission (39) du message urgent (25).

8. Véhicule automobile (10) avec un circuit d'émission (20) selon la revendication 7.
